# EUROPÄISCHE PATENTSCHRIFT

(11) **EP 2 628 771 B1**
(45) Veröffentlichungstag und Bekanntmachung des Hinweises auf die Patenterteilung: **02.11.2016**
(21) Anmeldenummer: 13152144.5
(22) Anmeldetag: 22.01.2013
(51) Int. Cl.: C08L 83/12, C08L 83/14

(54) **ZUSAMMENSETZUNGEN ENTHALTEND POLYMERE UND METALLATOME ODER -IONEN UND DEREN VERWENDUNG**
COMPOSITIONS CONTAINING POLYMERS AND METAL ATOMS OR IONS AND USE THEREOF
COMPOSITIONS CONTENANT DU POLYMÈRE ET DES ATOMES OU DES IONS MÉTAL ET LEUR UTILISATION

(30) Priorität: 20.02.2012 DE 102012202527
(43) Veröffentlichungstag der Anmeldung: 21.08.2013
(73) Patentinhaber: Evonik Degussa GmbH, 45128 Essen (DE)
(72) Erfinder: Fiedel, Michael, 45133 Essen (DE); Ferenz, Michael, 45147 Essen (DE); Knott, Wilfried, 45355 Essen (DE); Eißmann, Ingrid, 45884 Gelsenkirchen (DE); Wiechers, Susann, 45239 Essen (DE)

(56) Entgegenhaltungen:
- WO-A1-2009/138306
- WO-A2-2010/129123
- CN-B- 101 899 159
- DE-A1- 19 918 361
- US-B1- 6 727 338

## Beschreibung

Die vorliegende Erfindung betrifft Zusammensetzungen enthaltend die Komponenten A, ein Polymer erhältlich durch Umsetzung im Sinne einer Hydrosilylierung eines SiH-Funktionen und Vinyl-Funktionen aufweisenden Siloxane mit einer ungesättigten Verbindung, und D, Metallatome oder -ionen, ungleich Silizium, ein Verfahren zur Herstellung dieser Zusammensetzungen sowie die Verwendung der Zusammensetzungen zur Herstellung von oder als Entschäumer von Flüssigkeiten sowie zur Unterdrückung bzw. Reduktion der Schaumbildung von schäumenden Flüssigkeiten sowie zur Schaumdestabilisierung.

### Stand der Technik

Silizium-Kohlenstoff verknüpfte, organomodifizierte Siloxane, speziell Polyethersiloxane, stellen mit ihrem weit einstellbarem Tensidverhalten eine industriell sehr wichtige Stoffklasse dar. Der etablierte Weg zur Herstellung dieser Substanzen liegt in der Platinmetall-katalysierten Anlagerung SiH-Gruppen tragender Siloxane an olefinisch funktionalisierte Verbindungen (Hydrosilylierung). Häufig eingesetzte olefinisch funktionalisierte Verbindungen sind zum Beispiel Allylpolyether. Die Hydrosilylierung kann in Gegenwart eines Lösungsmittels oder lösungsmittelfrei erfolgen. Desweiteren kann die Hydrosilylierung auch in Gegenwart von Wasser durchgeführt werden, wie die Patentschrift EP 1754740 offenbart. Sie beschreibt die Herstellung wässriger Lösungen durch die Reaktion von SiH-haltigen Siloxanen oder Silanen mit Verbindungen, die mindestens eine Doppelbindung haben in Gegenwart von Wasser als Reaktionsmedium. Die dort beschriebenen SiH-haltigen Siloxane enthalten keine weiteren funktionellen Gruppen, z.B. Vinylgruppen, sodass die resultierenden Polyethersiloxane unvernetzt sind und die dem Stand der Technik bekannte Performance besitzen. Zudem ist diese Methode ausschließlich zur Herstellung wasserlöslicher Produkte geeignet und somit limitiert.

Die Topologie von Organosiloxanen beeinflusst deren Eigenschaften wesentlich. Dies zeigt sich in verschiedensten Applikationen, wobei jedoch es häufig nicht oder nur schwer vorhersehbar ist, in wie weit die Struktureigenschaften die Performance eines Siloxanpolymers beeinflusst. In der Regel bedarf es eines Experimentes, um Struktur- und Stoffeigenschaften miteinander zu korrelieren.

Eine spezielle Topologie besitzen Siloxane, deren Polymerrückgrad verzweigt ist bzw. die vernetzt sind. Polymere Netzwerke unterscheiden sich nicht nur in der Vernetzungsdichte, sondern auch in Bezug auf die Regelmäßigkeit von chemischer Struktur und Kettenlänge zwischen den Vernetzungsstellen sowie in der Überstruktur. Daraus resultiert eine große Produktvielfalt und es ist möglich durch die Einstellung dieser Parameter die Eigenschaften von Organosiloxanen gezielt zu beeinflussen.

Von großer kommerzieller Bedeutung sind Siloxanelastomere. Sie sind zugänglich durch härtbare Massen, bei denen es sich in der Regel um 2 Komponentensysteme handelt, wobei die eine Komponente aus endständig vinylfunktionellen Siloxanen und die andere aus seitenständig SiH-Gruppen tragenden Siloxanen besteht und nachfolgend unter katalytischen Bedingungen zur Aushärtung gebracht werden.

Klassische Zwei-Komponentensysteme zur Herstellung von Silikonelastomeren sind hinreichend bekannt und für ein breites Anwendungsspektrum kommerziell erhältlich. Als Beispiele seien ELASTOSIL® P 7684-40 A/B (Wacker Chemie, Burghausen) und Albisil^{®} A-1129 A&B bzw. Albisil^{®} A-3018 A&B (beide Hanse Chemie, Geesthacht) genannt.

Die Herstellung von endständig Vinylgruppen tragenden Siloxanen ist dem Fachmann ebenfalls hinreichend bekannt und kann unter anderem durch die Equilibrierung von Tetramethyldivinylsiloxan mit cyclischen Siloxanen wie Octomethylcyclotetrasiloxan oder silanol-terminierten Siloxanen durchgeführt werden. Beschrieben ist eine solche Equilibrierung u. a. in T. Smith - Origin of the self-reinforcement in poly(dimethylsiloxane) bimodal networks (Rubber Chemistry and Technology, 1990, 63, 2, p.256). EP 1319680 beschreibt die Equilibrierung von vinyldimethyl-terminierten Siloxanen mit silanol-terminierten Siloxanen mit NaOH (Seite 5, Beispiel 3).

WO 2010/080755 beschreibt die Herstellung von Polyethersiloxanelastomeren zur Speicherung und gezielten Freisetzung von pflegenden oder medizinisch wirksamen Substanzen (sog. drug delivery systeme) durch die Umsetzung von seitenständigen SiH-Siloxanen mit Mono- und Diallylpolyethern in hydrophoben Medien und nachgelagerter mechanischer Zerreibung zu kleineren Partikel sowie späterer Dispergierung.

Ein Nachteil dieses Vernetzungsprinzips liegt zum einen in der limitierten und kostenintensiven Zugänglichkeit der organischen Diallylpolyether und zum anderen an der daraus resultierenden vorgegebenen Topologie. So ist das Siloxane Rückgrat immer wieder durch Polyethersegmente unterbrochen, wobei die einzelnen Siloxanketten über Polyethersegmente miteinander verknüpft sind.

In der Regel ist der Siloxancharakter umso ausgeprägter, je weniger das Siloxan entlang des Rückgrates modifiziert ist. Dies ist ein Vorteil von vielen Applikationen, in denen ein hoher Siloxan-Anteil gewünscht ist.

Aus dem beschriebenen Stand der Technik wird deutlich, dass bis dato der einfache Zugang zu hochmolekularen, vernetzten Organosiloxanen nur eingeschränkt gegeben ist. Insbesondere die erhaltende hochmolekularen Gele bzw. Elastomere müssen aufwendig in eine handhabbare Form gebracht werden oder sie werden unter Einsatz eines Lösemittels hergestellt.

Werden wie zuvor genannt vernetzte Siloxane durch Umsetzung von SiH-haltigen Siloxanen mit alpha, omega-Divinysiloxanen hergestellt, so ist aufgrund der geringen Substantivität der alpha, omega -Divinysiloxane damit zu rechnen, dass ein Teil dieses Materials nicht in das Netzwerk mit einreagiert und daher als migrationsfähiges Material im Produkt verbleibt. In vielen Applikationen stellt dies einen bedeutenden Nachteil dar, da restliche Siloxane an die Oberfläche getragen werden und dort zum Beispiel die Applikationseigenschaften negativ beeinflussen können. Dieses wäre durch das sog. Ausschwitzen von niedermolekularen Bestandteilen aus der Polymermatrix gegeben.

Das Dokument DE 199 18 361 beschreibt flüssige Zusammensetzungen und ihre Verwendung als Entschäumer. Die Zusammensetzungen enthalten ein Polysiloxan, das aus einem Polysiloxan mit SiH-Reste, einem Polysiloxan mit Alkenylreste und einem Allylpolyether hergestellt wird.

Aufgabe der vorliegenden Erfindung war es daher vernetzte organomodifizierte Siloxane, die mindestens einen der im Stand der Technik beschriebenen Nachteile überwinden, herzustellen. Insbesondere sollte ein wirtschaftlich attraktiver und technisch leicht zu realisierender Zugang zu vernetzten Siloxanen geschaffen werden, der es vorzugsweise zudem erlaubt, einfach das Eigenschaftsprofil der hochmolekularen Anteile gezielt einzustellen.

### Beschreibung der Erfindung

Überraschenderweise wurde gefunden, dass Zusammensetzungen enthaltend die Komponenten A und D und optional B und/oder C, wie nachfolgend definiert, diese Aufgabe lösen.

Gegenstand der vorliegenden Erfindung sind deshalb Zusammensetzungen enthaltend die Komponenten A und D und optional B und/oder C wie in den Ansprüchen beschrieben.

Ein weiterer Gegenstand der vorliegenden Erfindung ist ein Verfahren zur Herstellung von erfindungsgemäßen Zusammensetzungen, welches dadurch gekennzeichnet ist, dass mindestens eine Verbindung der Formel (I) mit Verbindungen der Formel (I) und/oder mit anderen Verbindungen C, die eine C-C-Mehrfachbindung aufweisen, und nicht Formel (I) entsprechen, unter hydrosilylierenden Bedingungen umgesetzt wird.

Verfahren zur Herstellung von Zusammensetzungen enthaltend die Komponenten A und D und optional B und/oder Verbindungen C bei dem eine Verbindung der Formel (I) und optional eine Verbindung der Formel (II) gegebenenfalls mit ungesättigten Verbindungen, die eine oder mehrere Mehrfachbindungen enthalten, unter hydrosilylierenden Bedingungen und in Gegenwart eines die Hydrosilylierung katalysierenden Katalysators umgesetzt wird.

Ebenfalls Gegenstand der vorliegenden Erfindung ist die Verwendung der erfindungsgemäßen Zusammensetzungen sowie der Produkte des erfindungsgemäßen Verfahrens zur Herstellung von und als Entschäumer von Flüssigkeiten sowie zur Unterdrückung bzw. Reduktion der Schaumbildung von schäumenden Flüssigkeiten sowie zur Schaumdestabilisierung.

Die erfindungsgemäßen Zusammensetzungen haben den Vorteil, dass sie mit hoher Effektivität in der Lage sind Flüssigkeiten zu entschäumen. Die hohe Effektivität bezieht sich hierbei auf eine verkürzte Schaumzerfallszeit.

Ein weiterer Vorteil der erfindungsgemäßen Zusammensetzungen besteht darin, dass sie einen gegenüber bisherigen Entschäumern auf reiner Siloxanbasis stark erniedrigten Siliziumgewichtsanteil besitzen.

Ein Vorteil des erfindungsgemäßen Verfahrens ist es, die erfindungsgemäßen Zusammensetzungen direkt bei deren Herstellung in einer gut handhabbaren Form zu erhalten. Diese handhabbaren Formen sind zum Beispiel Emulsionen oder Dispersionen. Besonders vorteilhaft ist, dass selbst hochmolekulare gelartige bis feste Produkte in Emulsion leicht handhabbar und rührfähig sind.

Ein weiterer Vorteil des erfindungsgemäßen Verfahrens ist, dass die Produkte, welche in Emulsion hergestellt wurden, leicht formulierbar sind und nicht nachträglich aufwendig emulgiert bzw. dispergiert werden müssen. Diese nachträglichen Formulierungen sind häufig destruktiv in Bezug auf die chemische Struktur, d.h. die Polymere werden in nicht zwangsläufig vorhersehbarer Art und Weise in ihrer strukturellen Identität verändert. Derartige Veränderungen, die z.B. durch vermehrte Scherung entstehen sind nicht Gegenstand dieser Erfindung.

Die Zusammensetzungen und Verfahren zur Herstellung der Zusammensetzungen, sowie deren Verwendung, werden nachfolgend beispielhaft beschrieben, ohne dass die Erfindung auf diese beispielhaften Ausführungsformen beschränkt sein soll. Werden nachfolgend oder vorhergehend Gehaltsangaben (ppm oder %) gemacht, so handelt es sich, wenn nicht anders angegeben, um Angaben in Gewichts-% oder Gewichts-ppm (wppm). Bei Zusammensetzungen beziehen sich die Gehaltsangaben wenn nicht anders angegeben auf die Gesamtzusammensetzung. Werden nachfolgend Mittelwerte angegeben, so handelt es sich, wenn nicht anders angegeben um Zahlenmittel. Werden Molmassen verwendet, handelt es sich, wenn nicht ausdrücklich anders vermerkt um gewichtsmittlere Molmassen Mw mit der Einheit g/mol. Werden nachfolgend Messwerte angegeben, so wurden diese Messwerte, wenn nicht anders angegeben, bei einem Druck von 1013,25 hPa und einer Temperatur von 23°C ermittelt.

Die nachfolgenden Definitionen enthalten mitunter weitere Begriffe, die äquivalent und synonym zu dem definierten Begriff verwendet werden.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Die verschiedenen Fragmente in den nachfolgenden Formeln (I), (II), (III) und (IV) können statistisch verteilt sein. Statistische Verteilungen können blockweise aufgebaut sein mit einer beliebigen Anzahl an Blöcken und einer beliebigen Sequenz oder sie können einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinanderfolgen können. Die Formeln (I), (II), (III) und (IV) beschreiben Polymere, die eine Molgewichtsverteilung aufweisen. Daher stellen die Indizes das numerische Mittel über alle Monomereinheiten dar.

Die in den Formeln verwendeten Indexzahlen a, b, c, d, e, f, g, h, i, j, k, I, m, n, o, p, q und r, sowie die Wertbereiche der angegebenen Indizes können als Mittelwerte der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (I), (II), (III) und (IV).

Die erfindungsgemäßen Zusammensetzungen zeichnen sich dadurch aus, dass sie die Komponenten A und D enthalten, mit

A enthaltend ein Polymer erhältlich durch Umsetzung im Sinne einer Hydrosilylierung von Verbindungen der Formel (I)

Mₐ M^{v}_{b} M^{H}_{c} D_{d} D^{H}ₑ D^{v}_{f} T_{g} Qₕ Formel (I)

mit
M = [R¹₃SiO_{1/2}]
M^{V}= [R³R¹₂SiO_{1/2}]
M^{H} = [R¹₂SiHO_{1/2}]
D = [R¹₂SiO_{2/2}]
D^{H} = [R¹SiHO_{2/2}]
D^{V} = [R³R¹SiO_{2/2}]
T = [R¹SiO_{3/2}]
Q = [SiO_{4/2}]
a = 0 bis 42, bevorzugt 0 bis 22, insbesondere bevorzugt größer 0 bis 2,
b = 0 bis 42, bevorzugt gleich oder größer 1 bis 22, insbesondere bevorzugt größer 1 bis kleiner 2,
c = 0 bis 42, bevorzugt 0 bis 22, insbesondere bevorzugt 0,
d = 5 bis 600, bevorzugt 10 bis 400, mehr bevorzugt 20 bis 300, insbesondere bevorzugt 50 bis 200,
e = 0 bis 50, bevorzugt größer 0 bis 25, mehr bevorzugt 0,5 bis 10, insbesondere bevorzugt 0,7 bis 1,5,
f = 0 bis 50, bevorzugt 0 bis 25, insbesondere bevorzugt 0,
g = 0 bis 20, bevorzugt größer 0 bis 10, insbesondere bevorzugt 1 bis 5,
h = 0 bis 20, bevorzugt 0 bis 10, insbesondere bevorzugt 0,
mit der Maßgabe, dass folgende Bedingungen erfüllt sind
a + b + c größer oder gleich 2,
b + f größer 0, vorzugsweise größer oder gleich 1,2 und kleiner 2,
c + e größer 0, bevorzugt größer 0,8, mehr bevorzugt größer 1 bis 8, insbesondere bevorzugt von 1,2 bis kleiner 6 und 0,24 *(a+b+c+d+e+f+g) größer (c + e),
R¹ unabhängig voneinander gleiche oder verschiedene Alkylreste mit 1 bis 30 Kohlenstoffatomen, oder gleiche oder verschiedene Arylreste mit 6 bis 30 Kohlenstoffatomen oder gleich oder verschiedene Reste -OH oder -OR², bevorzugt Methyl, Phenyl, -OH oder-OR², insbesondere Methyl oder Phenyl,
R² unabhängig voneinander gleiche oder verschiedene Alkylreste mit 1 bis 12 Kohlenstoffatomen, oder gleiche oder verschiedene Arylreste mit 6 bis 12 Kohlenstoffatomen, bevorzugt Methyl, Ethyl, n-Propyl, Isopropyl, n-Butyl, sek-Butyl, iso-Butyl, Phenyl, insbesondere Methyl oder Ethyl,
R³ unabhängig voneinander gleiche oder verschiedene organische Reste mit einer endständigen C-C-Doppelbindung oder einer terminalen oder inneren C-C-Dreifachbindung, bevorzugt organische Reste mit einer terminalen Doppelbindung, insbesondere Vinyl (d.h. -CH=CH₂) oder Allyl (d.h. -CH₂CH=CH₂),
mit Verbindungen der Formel (I) und/oder mit anderen Verbindungen C, die eine C-C-Mehrfachbindung aufweisen, und nicht Formel (I) entsprechen,
und
D Metallatomen und/oder-ionen der Platingruppe, bevorzugt Platin-, Rhodium- und Rutheniumatomen, insbesondere Platinatomen,
wobei die Komponente Aein Polymer enthält, erhältlich durch Umsetzung im Sinne einer Hydrosilylierung von Verbindungen der Formel (I) mit einer oder mehreren ungessätigten Verbindungen C.

Die Verbindungen der Formel (I) können als selbstvernetzende Siloxane bezeichnet werden. Sie sind dadurch gekennzeichnet, dass sie neben SiH-Funktionen der Hydrosilylierung zugängliche Mehrfachbindungen aufweisen und somit zwei oder mehr Verbindungen der Formel (I) miteinander im Rahmen einer Hydrosilylierung reagieren können.

Die erfindungsgemäßen Zusammensetzungen können als Komponente A neben weiteren Polymeren ein Polymer enthalten, welches erhältlich ist durch Umsetzung im Sinne einer Hydrosilylierung von Verbindungen der Formel (I) und Verbindungen der Formel (II)

Mᵢ M^{H}ⱼ Dₖ D^{H}ₗ Tₘ Qₙ Formel (II)

mit
i = 0 bis 34, bevorzugt 0 bis 18, insbesondere bevorzugt größer 0 bis 2,
j = 0 bis 34, bevorzugt 0 bis 18, insbesondere bevorzugt größer 0 bis 2,
k = 5 bis 600, bevorzugt 10 bis 400, mehr bevorzugt 20 bis 200, insbesondere bevorzugt 50 bis 150,
I = 0 bis 50, bevorzugt größer 0 bis 35, mehr bevorzugt 1 bis 26, insbesondere bevorzugt größer 1 bis 10,
m = 0 bis 16, bevorzugt 0 bis 8, insbesondere 0,
n = 0 bis 16, bevorzugt 0 bis 8, insbesondere 0,
i + j größer oder gleich 2 und
j + l größer oder gleich 2.

Die Zusammensetzungen weisen eine Komponente A auf, die ein
Polymer enthält, erhältlich durch Umsetzung im Sinne einer Hydrosilylierung von Verbindungen der Formel (I) mit einer oder mehreren ungesättigten Verbindungen C. Bevorzugt weisen die erfindungsgemäßen Zusammensetzungen eine Komponente A auf, die ein Polymer enthält, erhältlich durch Umsetzung im Sinne einer Hydrosilylierung von Verbindungen der Formel (I) mit einer Verbindung der Formel (II) und einer oder mehreren ungesättigten Verbindungen C.

Es kann vorteilhaft sein, wenn die erfindungsgemäßen Zusammensetzungen eine Komponente B enthalten, erhältlich durch Umsetzung im Sinne einer Hydrosilylierung von Verbindungen der Formel (II), wie oben definiert und ungesättigten Verbindungen C.

Die erfindungsgemäßen Zusammensetzungen können eine oder mehrere Verbindungen C enthalten, diese können nachträglich zur Zusammensetzung zugegeben werden oder als nicht umgesetzter Reaktand bei der Herstellung der Zusammensetzung in der Zusammensetzung verbleiben.

Die oben genannten Verbindungen C sind vorzugsweise Olefine oder Polyether, die eine oder mehrere Kohlenstoff-Kohlenstoff-Mehrfachbindungen aufweisen, bevorzugt Polyether, die eine oder mehrere Kohlenstoff-Kohlenstoff-Mehrfachbindungen aufweisen.

Bevorzugte Olefine sind Olefine mit endständigen Doppelbindungen, z. B. alpha-Olefine, alpha,omega-Olefine, allylgruppentragende Mono- und Polyole oder Allylgruppen tragende Aromaten. Insbesondere bevorzugte Olefine sind Ethen, Ethin, Propen, 1-Buten, 1-Hexen, 1-Dodecen, 1-Hexadecen, 1,3-Butadien, 1,7-Octadien, 1,9-Decadien, Styrol, Eugenol, Allylphenol, Undecylensäuremethylester, Allylalkohol, Allyloxyethanol, 1-Hexen-5-ol, Allylamin, Propargylalkohol, Propargylchlorid, Propargylamin oder 1,4-Butindiol.

Bevorzugte Polyether mit einer oder mehreren Mehrfachbindungen sind zum Beispiel allylfunktionelle Polyether oder 1,4-Butindiol gestartete Polyether. Besonders bevorzugte Polyether, die Kohlenstoff-Kohlenstoff-Mehrfachbindungen aufweisen, sind vorzugsweise solche der Formel (III),

CH₂=CHCH₂O(C₂H₄O)O(C₂H₃(CH₃)O)ₚ(C₂H₃(C₂H₅)O)_{q}(C₂H₃(Ph)O)ᵣR⁴ Formel (III)

mit
R⁴ unabhängig voneinander gleiche oder verschiedene organische Reste, die keine der Hydrosilylierung zugängliche Mehrfachbindung tragen, oder Wasserstoff, bevorzugt Wasserstoff, Alkylreste oder Carboxyreste, besonders bevorzugt Wasserstoff, Methyl, Butyl oder Acetyl, insbesondere bevorzugt Wasserstoff,
o = 0 bis 200, bevorzugt größer 0 bis 150, besonders bevorzugt größer oder gleich 3 bis zu 150, insbesondere bevorzugt gleich oder größer 3 bis zu 100,
p = 0 bis 200, bevorzugt 0 bis 150, besonders bevorzugt größer 0 bis 100, insbesondere gleich 1 bis 50,
q = 0 oder größer 0 bis 100, bevorzugt 0 oder größer 0 bis 30, besonders bevorzugt 0 oder größer 0 bis 1, insbesondere 0,
r = 0 oder größer 0 bis 100, bevorzugt 0 oder größer 0 bis 30, besonders bevorzugt 0 oder größer 0 bis 1, insbesondere 0,
und den Bedingungen
o+ p + q + r größer 3, vorzugsweise ist p größer 0.

Es kann vorteilhaft sein, wenn die Indices des Polyethers gemäß Formel (III) die folgenden Bedingungen erfüllen: o ist größer 0, bevorzugt ist o größer p + q + r, besonders bevorzugt ist o größer p, ganz besonders bevorzugt ist o größer 1,5 * p. Der Index p des Polyethers gemäß Formel (III) ist vorzugsweise größer 0, im Falle von p = 0, ist o mindestens 4, bevorzugt mindestens 8; im Falle von p = 0 und q + r gleich oder größer 2 ist o mindestens 2 * (q + r). Wenn q + r kleiner 2 is und p größer 0t, dann ist o größer 4 * p.

Ganz besonders bevorzugte Polyether sind zum Beispiel:
CH₂=CHCH₂O(C₂H₄O)₈(C₂H₃(CH₃)O)₈H
CH₂=CHCH₂O(C₂H₄O)₈(C₂H₃(CH₃)O)₈CH₃
CH₂=CHCH₂O(C₂H₄O)₈(C₂H₃(CH₃)O)₈C(O)CH₃
CH₂=CHCH₂O(C₂H₄O)₈(C₂H₃(Ph)O)₃H

Weiterhin bevorzugte Polyether sind zum Beispiel:
CH₂=CHCH₂O(C₂H₄O)₂₀(C₂H₃(CH₃)O)₄,₅H
CH₂=CHCH₂O(C₂H₄O)₂₅(C₂H₃(CH₃)O)₄,₅H
CH₂=CHCH₂O(C₂H₄O)₈H
CH₂=CHCH₂O(C₂H₄O)₂₀(C₂H₃(CH₃)O)₄,₅Me
CH₂=CHCH₂O(C₂H₄O)₂₆(C₂H₃(CH₃)O)₄,₅Me
CH₂=CHCH₂O(C₂H₄O)₈Me
CH₂=CHCH₂O(C₂H₄O)₂₀(C₂H₃(CH₃)O)₄,₅Acetyl
CH₂=CHCH₂O(C₂H₄O)₂₆(C₂H₃(CH₃)O)₄,₅ Acetyl
CH₂=CHCH₂O(C₂H₄O)₈ Acetyl
CH₂=CHCH₂O(C₂H₄O)₈(C₂H₃(Ph)O)₃H
CH₂=CHCH₂O(C₂H₄O)₈(C₂H₃(Ph)O)₂H

Derartige Polyether sind in großer Vielfalt kommerziell erhältlich, z.B. unter den Markennamen Pluriol^{®} (BASF) oder Polyglycol AM^{®} (Clariant).

Vorzugsweise weisen die erfindungsgemäßen Zusammensetzungen die Komponente A mit einem Anteil von 1 bis 90 Gew.-%, vorzugsweise größer 1 bis 30 Gew.-%, bevorzugt 1 bis 15 Gew.-%,
die Komponente B mit einem Anteil von 0 bis 70 Gew. %, vorzugsweise größer 0 bis 40 Gew.-%. bevorzugt 1 bis 30 Gew.-%,
die Verbindungen C mit einem Anteil von 0 bis 95 Gew.-%, vorzugsweise 5 bis 90 Gew.-% bevorzugt 10 bis kleiner 90 Gew.-% und
die Komponente D mit einem Anteil von größer 0 bis 50 Gew.-ppm,
jeweils bezogen auf die Masse der Gesamtzusammensetzung, auf.

Bevorzugt weisen die Zusammensetzungen
die Komponente A mit einem Anteil von 1 bis 15 Gew.-%,
die Komponente B mit einem Anteil von 1 bis 30 Gew.-%,
die Verbindungen C mit einem Anteil von 10 bis kleiner 90 Gew.-% und
die Komponente D mit einem Anteil von größer 0 bis 50 Gew.-ppm,
jeweils bezogen auf die Masse der Gesamtzusammensetzung, auf.

In den erfindungsgemäßen Zusammensetzungen liegt das Polymer der Komponente A zu mehr als 90 Gew.-% bezogen auf die Komponenten A mit einer gewichtsmittleren Molmasse von weniger als 2500000 g/mol vor.

In den erfindungsgemäßen Zusammensetzungen liegt die Komponente B zu mehr als 90 Gew.-% bezogen auf die Komponente B mit einer gewichtsmittleren Molmasse von bis zu 1000000 g/mol vor. Eine solche Komponente B ist vorzugsweise in der Zusammensetzung mit kleiner als 5 Gew.-%, bezogen auf die Gesamtzusammensetzung vorhanden.

Bevorzugte Zusammensetzungen zeichnen sich dadurch aus, dass die Komponente
A zu mehr als 90 Gew.-% bezogen auf die Komponenten A Polymere mit einer gewichtsmittleren Molmasse von weniger als 2500000 g/mol aufweist und die Komponente
B zu mehr als 90 Gew.-% bezogen auf die Komponente B mit einer gewichtsmittleren Molmasse von bis zu 1000000 g/mol vorliegen und die Komponente B in der Zusammensetzung mit kleiner als 5 Gew.-%, bezogen auf die Gesamtzusammensetzung vorhanden ist.

Die erfindungsgemäßen Zusammensetzungen sind vorzugsweise bei 20°C und 1013 mbar flüssig. Flüssig im Sinne der Erfindung sind Substanzen, homogene und/oder heterogene Mischungen, die bei Raumtemperatur, bevorzugt bei 20°C und Normaldruck (1013 mbar) eine Viskosität von kleiner 120 Pa*s, bevorzugt kleiner 100 Pa*s und besonders bevorzugt kleiner 10 Pa*s besitzen. Bevorzugte Zusammensetzungen weisen demgemäß vorzugsweise eine entsprechende Viskosität, bestimmt wie in den Beispielen angegeben, auf.

Die erfindungsgemäßen Zusammensetzungen weisen vorzugsweise einen Gehalt von weniger als 25 Gew.-%, bevorzugt weniger als 20 Gew.-%, besonders bevorzugt weniger als 15%, und ganz besonders bevorzugt von 0,01 bis 10 Gew.-% Silizium bezogen auf die Summe der Massen der Komponenten A, B und D und Verbindung C der erfindungsgemäßen Zusammensetzung auf.

Der Gehalt an Metallatomen und/oder -ionen der Platingruppe beträgt in der erfindungsgemäßen Zusammensetzung vorzugsweise größer 0 bis 50 wppm (Massenppm), bevorzugt 1 bis 40 wppm, besonders bevorzugt 3 bis 30 wppm, ganz besonders bevorzugt 5 bis 20 wppm und insbesondere bevorzugt 8 bis 10 wppm bezogen auf die Gesamtmasse der Zusammensetzung. Bevorzugt liegen in der Zusammensetzung Platin, Rhuthenium und/oder Rhodium in diesen Konzentrationen vor.

Die erfindungsgemäßen Zusammensetzungen sind vorzugsweise farblos bzw. leicht gelblich und können klar oder trüb sein.

Die erfindungsgemäßen Zusammensetzungen können gegebenenfalls weitere Zusätze enthalten. Bevorzugte Zusätze sind aliphatische und/oder aromatische Öle, Lösemittel, Wasser und/oder Emulgatoren. Besonders bevorzugte Zusätze sind Wasser und Emulgatoren.

Bevorzugte Lösemittel sind z. B. Alkohole und aliphatische Kohlenwasserstoffe. Bevorzugte Alkohole können z.B. Methanol, Ethanol, Ethylenglykol, n-Propanol, isoPropanol, 1,2-Propylenglykol, 1,3-Propylenglykol, n-Butanol, 2-Butano und tert.-Butanol sein. Bevorzugte Kohlenwasserstoffe sind insbesondere Kohlenwasserstoffe mit einem Siedepunkt bei Normaldruck (1013 mbar) von kleiner 250 °C.

Als Emulgator im Sinne der Erfindung gelten Substanzen, die in der Lage sind eine Emulsion zu bilden. Diese Emulsion kann z. B. eine O/W, W/O oder Multiphasenemulsion sein. Der eingesetzte Emulgator bzw. das Emulgatorsystem kann z. B. ausgewählt werden aus den Gruppen der nicht-ionischen-, anionischen-, kationischen- oder amphoteren Emulgatoren oder deren Mischungen.

Beispiele für geeignete anionische Emulgatoren sind z. B. Alkalimetallseifen, Alkylarylsulfonate (z.B. Natriumdodecylbenzylsulfonat), langkettige Fettalkoholesulfate, sulfatierte Monoglyceride, sulfatierte Ester, sulfatierte-ethoxilierte Alkohole, Sulfosuccinate, Phosphatester, Alkylsarcosinate. Beispiele für geeignete kationische Emulgatoren sind unter anderem quaternäre Ammoniumsalze, Sulfoniumsalze, Phsphoniumsalze oder Alkylaminsalze. Beispiele für nichtionische Emulgatoren sind z. B. Fettalkoholalkoxylate, Fettsäurealkoxylate, Alkoxylate basierend auf Aminen oder Amiden, Glyerine- oder Polygycerinalkoxylate, Alkoxyklate des Sorbitols und weitere Zuckeralkoxylate. Kommerziell erhältliche nichtionische Emulgatoren sind z. B. erhältlich unter den Markennamen Breij^{®} (Uniqema, ICI Surfactans), Synperonic^{®} (Croda) oder Tergitol^{®} (Dow Chemical). Beispiele für amphotere Emulgatoren sind z. B. Betaine oder Alkylaminosäuresalze.

Geeignete Emulgatoren können auch Feststoffe, sogenannte Pickering-Emulgatoren, sein. So offenbart zum Beispiel EP 2067811 (Seite 15, Beispiel 1) die Verwendung von nanopartikulärem SiO₂ als geeigneten Emulgator für das Siliconacrylat Tego RC 726 (Evonik Goldschmidt GmbH, Essen).

Bevorzugte Emulgatoren sind z.B. TEGO^{®} Alkanol TD6 der Evonik Industries AG, Genapol^{®} T800 (Clariant), Synperonic^{®} PE F 108 der Croda.

Bevorzugte Einsatzmengen an Emulgatoren betragen vorzugsweise von 0,1 bis 49 Gew. %, bevorzugt 0,5 bis 20 Gew. %, besonders bevorzugt von 1 bis 15 Gew. %, bezogen auf die Zusammensetzung.

In einer weiteren Ausführungsform kann es vorteilhaft sein, wenn die erfindungsgemäßen Zusammensetzungen kein Wasser und Emulgatoren aufweisen.

Die erfindungsgemäßen Zusammensetzungen enthalten gegebenenfalls Verbindungen charakterisiert durch die Teilstruktur der Formel (V).

CH₃-CH=CH- Formel (V)

Bevorzugte Verbindungen enthaltend die Teilstruktur der Formel (V) sind Polyether der Formel (IV)

CH₃-CH=CH-O(C₂H₄O)ₒ(C₂H₃(CH₃)O)ₚ(C₂H₃(C₂H₅)O)_{q}(C₂H₃(Ph)O)ᵣR⁴ Formel (IV)

wobei die Indices und der Rest R⁴ wie bei Formel (III) definiert sind. Die dort für Formel (III) angegebenen Vorzugsbereiche gelten in gleicher Weise auch für die Verbindungen der Formel (IV).

Die Verbindungen der Formeln (IV) und/oder (V) können der Zusammensetzung zusätzlich hinzugefügt werden oder z. B. durch Umlagerungen an C-C-Mehrfachbindungen im Verlauf der Herstellung der Zusammensetzung, insbesondere bei der Umsetzung unter hydrosilylierenden Bedingungen entstehen.

Der Anteil an Verbindungen, die eine Teilstruktur der Formel (V) aufweisen, vorzugsweise Verbindungen der Formel (IV), an der erfindungsgemäßen Zusammensetzung beträgt vorzugsweise von 0,0001 bis 25 Gew.-%, bevorzugt von 0,01 bis 20 Gew.-%.

Es kann vorteilhaft sein, wenn die erfindungsgemäße Zusammensetzung keine Verbindungen, die eine Teilstruktur der Formel (V) aufweisen, aufweist bzw. der Anteil so gering ist, dass er sich nicht analytisch nachweisen lässt.

Die erfindungsgemäßen Zusammensetzungen enthaltend die Komponenten A und D und optional B und/oder Verbindung C können auf verschiedene Arten und Weisen erhalten werden. Vorzugsweise erfolgt die Herstellung der erfindungsgemäßen Polymere nach dem nachfolgend beschriebenen erfindungsgemäßen Verfahren.

Das erfindungsgemäße Verfahren zur Herstellung von erfindungsgemäßen Zusammensetzungen zeichnet sich dadurch aus, dass mindestens eine Verbindung der Formel (I) mit Verbindungen der Formel (I) und/oder mit anderen Verbindungen C, die eine C-C-Mehrfachbindung aufweisen, und nicht Formel (I) entsprechen, unter hydrosilylierenden Bedingungen und in Gegenwart eines die Hydrosilylierung katalysierenden Katalysators umgesetzt werden.

Vorzugsweise wird in dem erfindungsgemäßen Verfahren mindestens eine Verbindung der Formel (I) und mindestens eine Verbindung der Formel (II) mit mindestens einer ungesättigten Verbindung C, die eine oder mehrere C-C-Mehrfachbindungen enthält, unter hydrosilylierenden Bedingungen umgesetzt.

Generell können die Reaktanden in beliebiger Reihenfolge dem Reaktionsgefäß zugegeben werden.

Das erfindungsgemäße Verfahren kann unter Zusatz von Wasser durchgeführt werden. Das erfindungsgemäße Verfahren kann in Gegenwart eines oder mehrerer Lösemittel durchgeführt werden. Das erfindungsgemäße Verfahren kann unter Zusatz von einem oder mehreren Emulgatoren durchgeführt werden. Bevorzugt wird im erfindungsgemäßen Verfahren die hydrosilylierende Umsetzung unter Zusatz von Wasser, gegebenenfalls eines Lösemittels und gegebenenfalls unter Zusatz von Emulgatoren durchgeführt. Insbesondere bevorzugt wird das erfindungsgemäße Verfahren in einer Öl in Wasser (O/W) Emulsion durchgeführt.

Geeignete Lösemittel sind zum Beispiel solche, die die Hydrosilylierungsreaktion nicht inhibieren oder stören. Geeignete Lösemittel sind zum Beispiel aromatische und aliphatische Kohlenwasserstoffe, lineare oder cyclische Ether, Alkohole, Ester oder Mischungen verschiedener Lösemittel. Geeignet als Lösemittel sind auch viele in der Kosmetik eingesetzten Emollients z.B. Tegosoft^{®} P der Evonik Industries AG.

In einer weiteren Ausführungsform kann es vorteilhaft sein die erfindungsgemäßen Zusammensetzungen ohne Wasser und Emulgatoren herzustellen.

Bei den im Sinne einer Hydrosilylierung umsetzbaren ungesättigten Verbindungen C, handelt es sich vorzugsweise um wasserlösliche Verbindungen, wohingegen die Verbindungen der Formel (I) und Formel (II) vorzugsweise nicht wasserlöslich sind.

Zur Herstellung von Emulsionen können die verschiedenen Reaktanden der Hydrosilylierungsreaktion miteinander gemischt werden, wobei die Reihenfolge der Zugabe und die gewählten Zugabezeitpunkte dabei unterschiedlich sein kann. Es kann z.B. sinnvoll sein nur einen Teil der Reaktanden zu emulgieren und die weiteren Reaktanden nachträglich zuzudosieren.

Die einzelnen Reaktanden können ebenfalls portionsweise zu unterschiedlichen Zeiten der Emulgierung zugesetzt werden. Dieses Vorgehen ist dem Fachmann hinreichend bekannt. Die theoretischen Grundlagen zur Herstellung von Emulsionen sind u. a. beschrieben in Tharwat F. Tadros - "Emulsion Science and Technology" (Wiley-VCH Verlag GmbH & Co. KGaA; Auflage: 1. Auflage; 18. März 2009; ISBN-10: 3527325255). Methoden zur Emulgierung sind auch in US 4,476,282 und US 2001/0031792 aufgeführt, welche hiermit vollumfänglich in den Schutzbereich der vorliegenden Erfindung
eingeschlossen sind. In den genannten Referenzen finden sich auch Angaben zum Mischen der Reaktanden, dies kann auf verschiedene Weisen erfolgen, wobei unterschiedlichste Rühraggregate eingesetzt werden können.

Der Mischvorgang kann als Batch-Prozess (Eintopfverfahren), semi-kontinuierlicher Prozess oder kontinuierliches Verfahren durchgeführt werden.

Bei der Durchführung des erfindungsgemäßen Verfahrens werden vorzugsweise die Reaktionskomponenten dem Reaktionsgefäß zugeführt, mit der Maßgabe, dass vor Beginn der Zugabe des Katalysators mindestens ein Aliquot der Verbindung der Formel (I) oder mindestens ein Aliquot einer Mischung enthaltend die Verbindung (II) und eine ungesättigte Verbindung C, in der Reaktionsmischung im Reaktionsgefäß vorliegt.

Vorzugsweise werden die Verbindungen der Formel (I), ggf. zusammen mit Verbindungen der Formel (II), bevorzugt alle Verbindungen der Formeln (I) und ggf. (II) in dem Reaktionsgefäß vorgelegt, auf Reaktionstemperatur gebracht und anschließend mit einen Hydrosilylierungskatalysator versetzt. Anschließend können dann die Verbindungen C zugesetzt werden.

In einer anderen Ausführungsform kann es vorteilhaft sein, die Verbindungen C ggf. zusammen mit Verbindungen der Formel (II) bereits vor der Zugabe des Katalysators zuzusetzen.

In einer weiteren Ausführungsform kann es vorteilhaft sein, die Verbindungen C vorzulegen und die Verbindungen der Formel (I) und ggf. (II) nacheinander oder zusammen zuzudosieren.

Die Dosierreihenfolge kann im breiten Rahmen variiert werden. Gegebenfalls ist es vorteilhaft Reaktanden simultan zuzudosieren. Zudem können die einzelnen Reaktanden vorgemischt werden und als Mischung der Reaktionsmischung zugeführt werden. Es ist weiterhin möglich bestimmte Reaktanden in Portionen zu unterschiedlichen Phasen der Reaktion zuzusetzen. Die Art und Weise, auf die die Reaktion durchgeführt wird, kann die Zusammensetzung des Produktes deutlich beeinflussen.

Die Zuführung der Reaktanden und gegebenenfalls weiterer Zusätze kann portionsweise oder über die Zeit dosiert, wie auch in Mischformen dieser Zuführungen geschehen.

Das erfindungsgemäße Verfahren kann sowohl im Batch-Betrieb als auch kontinuierlich, beziehungsweise auch in denkbaren Mischbetriebführungen durchgeführt werde. Bevorzugtermaßen wird das erfindungsgemäße Verfahren im Batch-Betrieb geführt.

Die hydrosilylierende Umsetzung des erfindungsgemäßen Verfahrens kann z. B. wie in EP1520870 beschrieben durchgeführt werden.

Das erfindungsgemäße Verfahren wird vorzugsweise so durchgeführt, dass der Umsatz in Bezug auf die eingesetzten Si-H-Funktionen oder auf die C-C-Mehfachbindungen der eingesetzten Reaktanden vollständig bzw. möglicht vollständig ist. Vorzugsweise beträgt der Umsatz größer 99%, bevorzugt größer 99,9%, besonders bevorzugt größer 99,999 und ganz besonders bevorzugt größer 99,999999%. Der entsprechende Umsatz kann durch den Nachweis der verbleibenden SiH-Gruppen bzw. der nicht umgesetzten C-C-Mehrfachbindungen bestimmt werden.

Als Katalysatoren für die Hydrosilylierung können Metallkatalysatoren, vorzugsweise Edelmetallkatalysatoren der Platingruppe, bevorzugt platin-, rhodium- oder rutheniumhaltige Katalysatoren, insbesondere Komplexe eingesetzt werden, die dem Fachmann als hydrosilylierungsaktive Katalysatoren bekannt sind, z. B. Platinverbindungen, wie beispielsweise Hexachloroplatinsäure, (NH₃)₂PtCl₂, cis-Platin, Bis-(cycloocten)Platindichlorid, carbo-Platin, Platin(0)-(divinyltetramethyldisiloxan)-Komplexe, sogenannte Karstedt-Katalysatoren, oder auch mit unterschiedlichen Olefinen komplexierte Platin(0)-Komplexe, eingesetzt werden. Des Weiteren eignen sich prinzipiell Rhodium- und Rutheniumverbindungen, wie beispielsweise Tris(triphenylphosphin)-Rhodium(I)chlorid oder Tris(triphenylphosphin)-Rhuthenium(II)dichlorid. Im Sinne des erfindungsgemäßen Verfahrens bevorzugte Katalysatoren sind Platin(0)-Komplexe. Besonders bevorzugt sind Karstedt-Katalysatoren oder sogenannte WK-Katalysatoren, die gemäß EP1520870 hergestellt werden können. Geeignete und bevorzugte Bedingungen für die Hydrosilylierungsreaktion sind z.B. in EP 1520870 (Anwendungsbeispiele 1, 4-7) beschrieben.

Dem Fachmann ist geläufig, dass der Katalysator so gewählt sein muss, dass er nicht durch die verwendeten Einzelkomponenten der Reaktion inhibiert oder inaktiviert wird, bevorzugt werden Katalysator-Reaktandenmischungen, die die Eigenschaften, sowie die Reaktivität des Katalysators nicht beeinflussen.

Die Katalysatoren werden vorzugsweise in einer Menge von 0,1 bis 1000 wppm, mehr bevorzugt 1 bis 100 wppm, besonders bevorzugt 5 bis 30 wppm und insbesondere bevorzugt 8 bis 15 wppm bezogen auf die Masse des Gesamtansatzes der Hydrosilylierungsreaktion eingesetzt.

Die erfindungsgemäßen Zusammensetzungen oder die erfindungsgemäße hergestellten Zusammensetzungen können zur Herstellung von Entschäumern oder als Entschäumer von Flüssigkeiten verwendet werden.

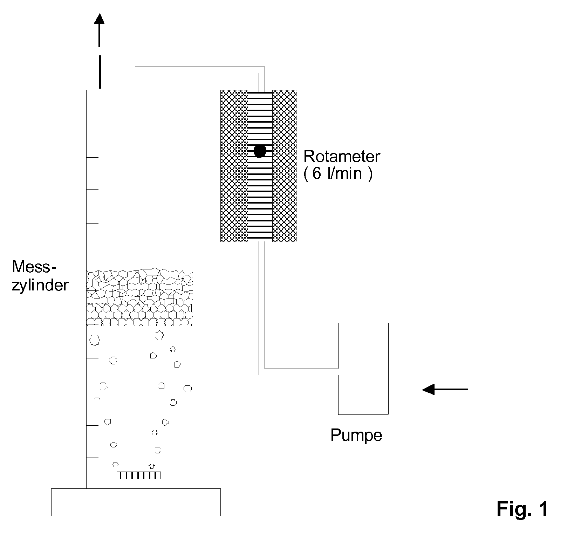

Die vorliegende Erfindung wird an Hand der Abbildung Fig. 1 näher erläutert, ohne dass die Erfindung, deren Anwendungsbreite sich aus der gesamten Beschreibung und den Ansprüchen ergibt, auf die in der Abbildung genannten Ausführungsform beschränkt sein soll. Fig. 1 zeigt einen schematischen Aufbau einer Apparatur zur Durchführung von Entschäumungsexperimenten, dem sogenannten Frittentest.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Ausführungsbeispiele

### Allgemeine Methoden und Materialien

### Viskosität:

Bestimmung der Viskosität mittels eines Spindelviskosimeter Typ Brookfield LV-DV-l+ Brookfield-Viskosimeter sind Rotationsviskosimeter mit definierten Spindelsätzen als Rotationskörper. Bei den verwendeten Rotationskörpern handelte es sich um einen LV-Spindelsatz. Aufgrund der Temperaturabhängigkeit der Viskosität wurde die Temperaturen von Viskosimeter und Messflüssigkeit während der Messung auf +/- 0,5 °C bei 20 °C genau konstant gehalten. Weitere verwendete Materialien neben dem LV-Spindelsatz waren ein thermostatisierbares Wasserbad, ein Thermometer 0-100°C (Skalenteile 1°C bzw. kleiner) und ein Zeitmessgerät (Skalenwerte nicht größer als 0,1 Sekunden). Zur Messung wurden 100 ml der Probe in eine Weithalsflasche gefüllt; temperiert und luftblasenfrei vermessen, nachdem eine vorherige Kalibrierung erfolgt war. Zur Bestimmung der Viskosität wurde das Viskosimeter so zur Probe positioniert, dass die Spindel bis zur Markierung im Produkt eintaucht. Die Messung wird mit Hilfe der Starttaste ausgelöst, wobei darauf geachtet wurde, dass die Messung im günstigen Messbereich von 50% (+/- 20%) des maximal messbaren Drehmoments erfolgte. Das Ergebnis der Messung wurde am Display des Viskosimeters in mPas ausgegeben, wobei die Division durch die Dichte (g/ml) die Viskosität in mm²/s liefert.

### Bestimmung des SiH-Gehaltes

Die Bestimmungen der SiH-Werte der eingesetzten Wasserstoffsiloxane aber auch die der Reaktionsmatrices erfolgen jeweils gasvolumetrisch durch die Natriumbutylat induzierte Zersetzung aliquot eingewogener Probemengen an einer Gasbürette. Eingesetzt in die allgemeine Gasgleichung gestatten die gemessenen Wasserstoffvolumina die Gehaltsbestimmung aktiver SiH-Funktionen in den Edukten aber auch in den Reaktionsansätzen und erlauben so die Umsatzkontrolle.

### Bestimmung des Gehalts an C-C-Mehrfachbindungen

Der Gehalt an C-C-Mehrfachbindungen lässt sich zum Beispiel durch die Bestimmung der lodzahl ermitteln. Eine gängige Methode ist die Bestimmung der lodzahl nach Hanus (Methode DGF C-V 11 a (53) der Deutschen Gesellschaft für Fettwissenschaft e.V.). Die im Folgenden angegebenen Werte beruhen auf dieser Methode.

### Bestimmung der Anzahl der Hydroxygruppen (OHZ)

Der Gehalt an OH-Gruppen lässt sich zum Beispiel durch die Methode der Acetylierung mit anschließender Rücktitration der überschüssigen Säure bestimmen (Methode DGF C-V 17a der Deutschen Gesellschaft für Fettwissenschaft e.V.). Die im Folgenden angegebenen Werte beruhen auf dieser Methode.

### Bestimmung der Molmassenverteilungen:

Die gelpermeationschromatographischen Analysen (GPC) erfolgten auf einem Gerät Typ 1100 der Firma Hewlett-Packard unter Verwendung einer SDV-Säulenkombination (1000/10000 Å, je 65cm, Innendurchmesser 0,8 cm, Temperatur 30°C), THF als mobilen Phase mit einer Fließrate von 1ml/min und einem RI-Detektor (Hewlett-Packard). Die Kalibrierung des Systems erfolgte gegen einen Polystyrolstandard im Bereich von 162 - 2.520.000 g/mol.

### Frittentest

Der sog. Frittentest ist eine Methode zur Bestimmung der Wirksamkeit von Entschäumerkonzentraten oder Entschäumeremulsionen. Hierbei wird in einem Standzylinder eine definierte Luftmenge durch eine Tensidlösung hindurchgeleitet, um eine konstante Menge Schaum pro Zeiteinheit herzustellen. Dieser Schaum soll durch Zugabe eines Entschäumers zerstört und die weitere Entstehung des Schaumes verhindert werden. Für eine solche typische Austestung werden benötigt: Meßzylinder (100 ml), Standzylinder ohne Fuß (2000 ml), Fuß für Standzylinder, Meßkolben (1000 ml), Fritte mit Verlängerung der Porosität 1, Aquariumpumpe, Rotameter, Pipette (10 - 1000 µI) mit Pipettenspitzen, Spatel, Magnetrührer mit Rührkern, Tensidlösung sowie Wasser (dest.). Die Durchführung erfolgt in der Form, dass Luft einer definierten Menge mittels einer Glasfritte, die in den Standzylinder plaziert wird, durch die Tensidlösung hindurchgeleitet wird. Der Entschäumer wird vor dem Beginn der Bestimmung zudosiert und jeweils, wenn 1000 ml Schaum entstanden sind. Der Zeitpunkt jeder Dosierung wird notiert. Die Anzahl und das Volumen der Entschäumerdosierungen innerhalb der gesamten Testdauer werden aufaddiert und bilden somit den Gesamtverbrauch des Entschäumers. Einen schematischen Aufbau einer Apparatur zur Durchführung des Frittentests zeigt Fig. 1.

### Tröpfchengröße:

Die Bestimmung der Größenverteilung der hergestellten Emulsionen/Dispersionen erfolgte mittels statischer Laserbeugung an einem Messgerät LS320 der Firma Beckman-Coulter.

### Materialien:

| Material | | Lieferant |
|---|---|---|
| Decamethylcyclopentasiloxan | D₅ | ABCR (Kat.-Nr. AB111012) |
| Octamethylcyclotetrasiloxan | D₄ | ABCR (Kat.-Nr. AB111277) |
| seitenständiges Wasserstoffsiloxan | Me₃SiO[SiMeHO]ₙSiMe₃ | ABCR (Kat.-Nr. HMS-993) |
| Trifluormethan-sulfonsäure | TFMSA | Aldrich (Kat.-Nr. 347817) |
| Solvesso 150 (aliphatisches Lösemittel) | | Exxon Mobil Corporation |
| Hostapur SAS | | Clariant, Frankfurt a.M. |
| Marlon A 315 | | Sasol Germany GmbH, Hamburg |
| Synperonic PE/F 108 | | Croda GmbH, Nettetal |
| Allylpolyether 1 | lodzahl = 13,5 g/100g, OHZ = 35 mg KOH/g, 90 Gew.% PO | |
| Allylpolyether 2 | lodzahl = 18,5 g/100g, OHZ = 44 mg KOH/g, 23 Gew.% PO | |
| Divinyltetrammethyldisiloxan | ^{Vi}MM^{Vi} | ABCR (Kat.-Nr. AB121873) |
| Polymethylphenylsiloxan (500 cSt) | | ABCR (Artikel PMM-0025) |
| Natriumhydrogencarbonat | | Aldrich (Kat.-Nr. S6297) |

Die eingesetzten Karstedt-Lösungen sind Platin(0)-Divinyltetramethyldisiloxan-komplexe in Decamethylcyclopentasiloxan in der Konzentration von 0,1 Gew. % Platin (erhältlich bei Umicore mit 21,37 Gew. % Platin, welches durch Verdünnen mit Decamethylcyclopentasiloxan auf 0,1 Gew. % Pt eingestellt wird). Die in den folgenden Beispielen angegebenen Dosierungen des Katalysators beziehen sich auf die Massensumme der Einwaagen der Reaktionskomponenten der Hydrosilylierung, zugesetzte Lösemittel werden in dieser Berechnung nicht berücksichtigt.

### Beispiel 1: Herstellung der erfindungsgemäßen Zusammensetzungen:

### Synthesebeispiel E1:

In einem Mehrhalskolben, ausgestattet mit Rührvorrichtung, Stickstoffzuleitung und Rückflusskühler wurden 48,4 g Tetramethyldivinyldisiloxan (^{Vi}MM^{Vi}), 96,9 g eines mehrfach seitenständigen Wasserstoffsiloxans (15,7 eq SiH/kg) der allgemeinen Formel Me₃SiO[SiMeHO]₄₄SiMe₃ (CAS: 63148-57-2, zum Beispiel erhältlich bei ABCR), 441,6 g Decamethylcyclopentasiloxan (D₅) und 0,35 ml TFMSA vorgelegt und bei Raumtemperatur 24 Stunden gerührt. Nach vollständiger Equilibrierung wurde durch Zugabe von 11,7 g Natriumhydrogencarbonat binnen 2 Stunden neutralisiert und nachfolgend filtriert. Aus dem erhalten farblosen klaren Silikonequilibrat wurde ein Anteil von 0,256 % SiH bestimmt.

### Synthesebeispiel E2:

In einem Mehrhalskolben, ausgestattet mit Rührvorrichtung, Stickstoffzuleitung und Rückflusskühler wurden 6,22 g Tetramethyldivinyldisiloxan, 1,74 g eines mehrfach seitenständigen Wasserstoffsiloxans (1,58% SiH), 389,6 g Octamethylcyclotetrasiloxan und 0,4 ml TFMSA vorgelegt und bei Raumtemperatur 24 Stunden gerührt. Nach vollständiger Equilibrierung wurde durch Zugabe von 8,0 g Natriumhydrogencarbonat binnen 2 Stunden neutralisiert und nachfolgend filtriert. Es wurde ein farbloses, klares Silikonequilibrat erhalten.

### Synthesebeispiel E3:

In einem Mehrhalskolben, ausgestattet mit Rührvorrichtung, Stickstoffzuleitung und Rückflusskühler wurden 3,1 g Divinyltetrammethyldisiloxan, 0,98 g eines mehrfach mittelständigen Wasserstoffsiloxans (15,7 eq/kg SiH), 194,7 g Decamethylcyclopentasiloxan (D₅, ABCR) und 0,12 ml TFMSA vorgelegt und bei Raumtemperatur 24 Stunden gerührt. Nach vollständiger Equilibrierung wurde durch Zugabe von 4,0 g Natriumhydrogencarbonat binnen 2 Stunden neutralisiert und nachfolgend filtriert. Es wurde ein farbloses, klares Silikonequilibrat erhalten.

### Synthesebeispiel E4:

In einem Mehrhalskolben, ausgestattet mit Rührvorrichtung, Stickstoffzuleitung und Rückflusskühler wurden 13,33 g eines mehrfach mittelständigen Wasserstoffsiloxans (15,7 eq/kg SiH), 65,05 g D₅, 21,6 g eines Polymethylphenylsiloxans (500 cSt, ABCR) und 0,1 ml Trifluormethansulfonsäure (Aldrich) vorgelegt und bei Raumtemperatur 24 Stunden gerührt. Nach vollständiger Equilibrierung wurde durch Zugabe von 6,0 g Natriumhydrogencarbonat binnen 2 Stunden neutralisiert und nachfolgend filtriert. Es wurde ein farbloses, klares Silikonequilibrat erhalten.

### Synthesebeispiel S1:

In einem Becherglas wurden 500 mL Synperonic PE F 108 vorgelegt und mittels eines Dispermaten (Mizerscheibe, Durchmesser 4 cm) bei 1000 U/min gerührt. Unter fortwährender Scheerung wurden binnen 10 Minuten 313,8 g Wasser portionsweise zugegeben. Nach weiterer zweistündiger Scheerung bei 1000 U/Min entstand eine klare Lösung. In einem separaten Gefäß wurden 79,8 g Allylpolyether 1, 24,8 g eines mittelständigen Wasserstoffsiloxans (1,27 eq SiH/kg) und 4,89 g des Siloxans E3 bei 500 U/Min mittels eines KPG Rührers in eine feinteilige Emulsion überführt. 46 g dieser Emulsion wurden sodann in einem weiteren Gefäß vorgelegt, auf 70°C erhitzt und ebenfalls 46 g der zu Anfang hergestellten Emulgatorlösung unter Scheerung mit einem Dispermaten (1000 U/Min, Mizerscheibe, Durchmesser 4 cm) binnen 30 Minuten homogenisiert. Zu dieser Mischung wurde dann 46 µl einer Karstedt-Katalysatorzubereitung (1 % Pt) zugegeben und die Hydrosilylierungsreaktion initiiert. Nach 1 Stunde konnte gasvolumetrisch kein freies SiH mehr nachgewiesen werden. Es wurde nach Erkalten auf Raumtemperatur eine weiße Paste erhalten.

### Synthesebeispiel S2:

In einem Mehrhalskolben mit Stickstoffzuleitung, Rührvorrichtung und Innenthermometer wurden 46,2 g Allylpolyether 1 (30 mol% Überschuss) und 17,5 g eines mittelständigen Wasserstoffsiloxans (1,27 eq SiH/kg) sowie 1,24 g E3 vorgelegt und auf 90 °C erhitzt. Der Zusatz von 32 µl einer Karstedt-Katalysatorzubereitung (1 % Pt) initiiert die Hydrosilylierungsreaktion. Nach 5 Stunden konnte gasvolumetrisch kein SiH gefunden werden. Das Produkt war klar und zeigte eine Viskosität von 1200 mPas/s (Brookfield, Spindel 2, 12 rpm). Die GPC-Analyse (THF) ergab eine Molmassenverteilung von Mn = 5.300 g/mol und Mw=28.500 (PDI = 5,34).

### Synthesebeispiel S3:

Zu 11,06 g einer Lösung von Synperonic PE F 108 (10 Gew.-% in Wasser) wurden 9,06 g eines Allylpolyethers 1 zugegeben und mittels einer Rührvorrichtung mit Mizerscheibe bei 1000 rpm ca. 5 Minuten homogenisiert. Zu der erhaltenen, sehr feinteiligen Emulsion wurden binnen 5 Minuten unter ständiger Scheerung (1000 rpm) 1,96 g E1 Equlilibrates zugesetzt. Die Hydrosilylierungsreaktion wurde durch Zugabe von 10 µl Karstedt-Katalysatorzubereitung (1% Pt) und über 2 Stunden bei 70 °C zum vollständigen SiH-Umsatz geführt.

### Synthesebeispiel S4:

Zu 25,8g einer 10 Gew.-%igen Emulgatorlösung (Synperonic PE F 108) wurden 9,1 g Allylpolyether 1 mittels einer Rührvorrichtung mit Mizerscheibe bei 1000 rpm ca. 5 Minuten homogenisiert. Zu dieser Emulsion wurden binnen 5 Minuten 1,9 g des Equilibrates E1 zugegeben und unter ständiger Scheerung (1000 rpm) emulgiert. Die Hydrosilylierungsreaktion wurde durch Zugabe von 10 µl Karstedt-Katalysatorzubereitung (1 % Pt) initiiert und mittels eines Flügelrührers bei 600 rpm über 2 Stunden bei 70 °C zum vollständigen SiH-Umsatz geführt.

### Synthesebeispiel S5:

In einem Mehrhalskolben, mit Stickstoffzuleitung, Rührvorrichtung und Rückflusskühler wurden 12,5 g E1 und 57,5g Allylpolyether 1 vorgelegt und auf 70°C erhitzt. Nach Erreichen der Reaktionstemperatur wurden 35 µl Karstedt-Katalysatorzubereitung (1% Pt) zugegeben. Die von leichter Exothermie und einem merklichen Viskositätsanstieg begleitete Reaktion konnte binnen 1 Stunde zu einem vollständigen SiH-Umsatz gebracht werden.

### Ref. Synthesebeispiel S6:

3,0 Gramm TEGO^{®} Alkanol TD6 (Isotridecylalkohol, Polyoxyethylen (6) Ether, Evonik Goldschmidt GmbH), 2,0 g Genapol^{®} T800 (Talgfettalkohol, Polyoxyethylen (80) Ether, Clariant GmbH) und 5,0 g Wasser wurden in einem 100 mL PE-Becher auf 60 °C im Ofen aufgeheizt und mit einem Dispermat (VMA-Getzmann GmbH) mit einer Dissolverscheibe (0 3 cm) bei 500 U/Min gerührt, bis eine homogene, viskose Lösung entstand.

Innerhalb von 5 Minuten wurden 20,6 g des Vinylhydrogensiloxans E2 tropfenweise in die Paste unter Rühren bei 1000 U/Min und bei Raumtemperatur eingearbeitet. Danach wurde die Paste mit 18,6 g Wasser verdünnt. Es entstand die Emulsion. Messung der Tropfengröße vor der Reaktion mit Hilfe eines Coulter LS320 Instruments ergab einen mittleren Tropfendurchmesser von 0,76 µm. Die Hydrosilylierungsreaktion wurde durch Zugabe von 10 ppm einer Platinverbindung (Karstedt-Katalysatorzubereitung) initiiert und mittels eines Flügelrührers bei 600 rpm über 2 Stunden bei 70 °C zum vollständigen SiH-Umsatz geführt. Die Größenbestimmung mittels des Coulter LS320 Instruments lieferte keinen signifikanten Anstieg der Durchmesser.

### Ref. Synthesebeispiel S7:

3,6 Gramm TEGO^{®} Alkanol TD6 (Isotridecylalkohol, Polyoxyethylen (6) Ether, Evonik Goldschmidt GmbH), 2,3 g Genapol^{®} T800 (Talgfettalkohol, Polyoxyethylen (80) Ether, Clariant GmbH) und 23,5 g Wasser wurden in einem 200 mL PE-Becher auf 60 °C im Ofen aufgeheizt und mit einem Dispermat (VMA-Getzmann GmbH) mit einer Dissolverscheibe (0 3 cm) bei 500 U/Min gerührt, bis eine homogene, viskose Lösung entstand. Innerhalb von 5 Minuten wurden 40,0 g des Vinylhydrogensiloxans E2 tropfenweise in die Paste unter Rühren bei 1000 U/Min und bei Raumtemperatur eingearbeitet. Danach wurde die Paste mit den restlichen 30,6 g Wasser verdünnt. Es entstand die Emulsion. Messung der Tropfengrösse mit Hilfe eines Coulter LS320 Instruments ergab einen mittleren Tropfendurchmesser von 7,0 µm. Die Hydrosilylierungsreaktion wurde durch Zugabe von 10 ppm einer Platinverbindung (Karstedt-Katalysatorzubereitung) initiiert und mittels eines Flügelrührers bei 600 rpm über 2 Stunden bei 70 °C zum vollständigen SiH-Umsatz geführt. Die Größenbestimmung mittels des Coulter LS320 Instruments lieferte keinen signifikanten anstieg der Durchmesser.

### Synthesebeispiel S 8:

In einem Mehrhalskolben mit KPG-Blatt-Rührer, Rückflusskühler, Inertgaszuleitung und Temperaturfühler wurden 14 g eines Siloxans der Formel M₁ M^{H}₁ D₁₂₃ D^{H}₂₅T₀ Q₀ (R¹ = Me) mit 69,94 g Allylpolyether 2, 2,98 g eines M_{0,04}M^{V}_{1,96} M^{H}₀ D_{147,1} D^{H}_{0,9} D^{v}₀ T₀ Q₀ Siloxans (E4) sowie 20 g Solvesso 150 innig miteinander vermischt und unter Inertgasatmosphäre durch Zugabe von 10 ppm Platin in Form eines Karstedt-Katalysators der trüben Reaktionsmischung die Hydrosilylierung initiiert. Dann wurde auf 80 - 90 °C Reaktionstemperatur erhitzt und die Exothermie wurde so abgefangen, dass die Reaktionstemperatur von 90°C nicht überschritten wurde. Nach 2,5 Stunden konnte gasvolumetrisch kein freies SiH mehr nachgewiesen werden. Das leicht gelbe Produkt zeigte nach GPC-Analyse eine Molmassenverteilung von Mₙ = 4744 g/mol und M_{w} = 164457 (M_{w}/Mₙ = 34,67) und eine Viskosität von 3,1 Pa* s.

### Synthesebeispiel S 9:

In einem Mehrhalskolben mit KPG-Blatt-Rührer, Rückflusskühler, Inertgaszuleitung und Temperaturfühler wurden 16,1 g eines Siloxans der Formel M₂ M^{H}₀ D₆₇ D^{H}₂₄T₀ Q₀ (mit R¹ = Me bzw. Phenyl) welches in E4 hergestellt wurde mit 59,4 g Allylpolyether 2, 4,4 g eines M₀ M^{v}₂ M^{H}₀ D₃₅₀ D^{H}₀ D^{v}₀ T₀ Q₀ (mit R¹ = Me und R³ = -CH₂CH₂) Siloxans sowie 20 g Solvesso 150 innig miteinander vermischt und unter Inertgasatmosphäre auf 80 - 90°C Reaktionstemperatur erhitzt. Nach Erreichen der Reaktionstemperatur wurde durch die Zugabe von 10 ppm Platin in Form eines Karstedt-Katalysators zur bis dahin trüben Reaktionsmischung die Hydrosilylierung initiiert. Dabei wurde die Exothermie so abgefangen, dass die Reaktionstemperatur von 90°C nicht überschritten wurde. Nach 4,5 Stunden konnte gasvolumetrisch kein freies SiH mehr gefunden werden. Das leicht gelbe Produkt zeigte nach GPC-Analyse (THF) eine Molmassenverteilung von Mₙ = 4849 g/mol und M_{w} = 78619 (M_{w}/Mₙ = 16,21) und eine Viskosität von 8,9 Pa*s.

### Synthesebeispiel S 10:

In einem Mehrhalskolben mit KPG-Rührer, Rückflusskühler, Inertgaszuleitung und Temperaturfühler wurden 16,1 g eines Siloxans der Formel M₁ M^{H}₁ D₁₂₃ D^{H}₂₅T₀ Q₀ (mit R¹=Me) mit 63,2 g Allylpolyether 2, 2,6 g eines M₀ M^{v}₆ M^{H}₆ D₁₇₃ D^{H}₀ D^{v}₀ T₀ Q₅ Siloxans (mit R¹ = Me und R³ = -CH₂CH₂) sowie 20 g Solvesso 150 innig miteinander vermischt und unter Inertgasatmosphäre auf 80°C Reaktionstemperatur erhitzt. Nach Erreichen der Reaktionstemperatur wurde durch die Zugabe von 10 ppm Platin in Form eines Karstedt-Katalysators zur bis dahin trüben Reaktionsmischung die Hydrosilylierung initiiert. Dabei wurde die Exothermie so abgefangen, dass die Reaktionstemperatur von 90°C nicht überschritten wurde. Nach 3 Stunden konnte gasvolumetrisch kein freies SiH mehr gefunden werden. Das leicht gelbe Produkt zeigte nach GPC-Analyse eine Molmassenverteilung von Mₙ = 3886 g/mol und M_{w} = 414335 g/mol (M_{w}/Mₙ = 106,63) und eine Viskosität von 13 Pa*s.

### Synthesebeispiel S 11 (nicht erfinderisch):

In einem Mehrhalskolben mit Stickstoffzuleitung, Rührvorrichtung und Innenthermometer wurden 435,7 g Allylpolyether 1 (40 mol% Überschuss) und 94,3 g eines mittelständigen Wasserstoffsiloxans (1,82 eq SiH/kg) vorgelegt und auf 90 °C erhitzt. Der Zusatz von 0,26 ml einer Karstedt-Katalysatorzubereitung (1 % Pt) initiierte die Hydrosilylierungsreaktion. Nach 7 Stunden konnte gasvolumetrisch kein SiH gefunden werden. Das Produkt war klar und zeigte eine Viskosität von 1212 mPas/s (Brookfield, Spindel 2, 12 rpm). Die GPC-Analyse (THF) ergab eine Molmassenverteilung von Mn = 5.480 g/mol und Mw=24.592 (PDI = 4,49).

### Synthesebeispiel S 12:

In einem Mehrhalskolben mit Stickstoffzuleitung, Rührvorrichtung und Innenthermometer wurden 402,8 g Allylpolyether 1 (40 mol% Überschuss) und 90,8 g eines mittelständigen Wasserstoffsiloxans (1,82 eq SiH/kg) sowie 36,4 g des Siloxan-Equilibrates E 3 vorgelegt und auf 90 °C erhitzt. Der Zusatz von 0,26 ml einer Karstedt-Katalysatorzubereitung (1 % Pt) initiierte die Hydrosilylierungsreaktion. Nach 10 Stunden konnte gasvolumetrisch kein SiH gefunden werden. Das Produkt war leicht trüb und zeigte eine Viskosität von 8800 mPas/s (Brookfield, Spindel 2). Die GPC-Analyse (THF) ergab eine Molmassenverteilung von Mn = 5.717 g/mol und Mw=180155 (PDI = 31,51).

### Beispiel 2: Verwendung der erfindungsgemäßen Zusammensetzungen zur Herstellung von Zubereitungen

a) Die Emulgierung der nach Synthesebeispiel S 11 beschriebenen Zubereitung erfolgte nach der in EP 1132417 (Beispiel 1) beschriebenen Methode. Die so erhaltene 20 Gew.-% ige Entschäumeremulsion wurde gem. Beispiel 3 (nachfolgend) als Referenz verwendet.
b) Die Emulgierung der nach Synthesebeispiel S 12 beschriebenen Zubereitung erfolgte nach der in EP 1132417 (Beispiel 1) beschriebenen Methode. Die so erhaltene 20 Gew.-% ige Entschäumeremulsion wurde gem. Beispiel 3 (nachfolgend) gegen 1 a ausgetestet.

### Beispiel 3: Verwendung der erfindungsgemäßen Zusammensetzungen aus Beispiel 2 als Entschäumer

Die nach Beispiel 2a und 2b hergestellten Zubereitungen wurden mittels des oben beschriebenen Frittentests auf ihre Wirksamkeit hin ausgeprüft. Es wurden dabei zwei unterschiedliche Tensid-Lösungen (jeweils 0,2 Gew.-% in Wasser) verwendet. Der Test wurde bei 60 °C durchgeführt.

**Tabelle 1: Gesamtdosage der Entschäumerzubereitung hergestellt nach Beispiel 2a und Beispiel 2b nach 60 Minuten bei einer Temperatur von 60°C unter Verwendung von zwei unterschiedlichen Tensidsystemen.**

| Produkt | Gesamtdosage [µl] - Tensidsystem 1 | Gesamtdosage [µl] - Tensidsystem 2: |
|---|---|---|
| Beispiel 2 a | 1100 | 300 |
| Beispiel 2 b | 120 | 80 |
| Reduktion auf [Vol. %] | 10,9 | 26,7 |

| | | |
|---|---|---|
| Tensidsystem 1 : Hostapur SAS, (60°C, 0,2 Gew.-%), Tensidsystem 2 : Marlon A 315, (60°C, 0,2 Gew.-%) | | |

Die benötigten Volumina zur Schaumreduktion waren für die Proben des Beispiels 2 b deutlich reduziert; so genügten im Beispiel 2b /Tensid 1 schon 120 µl der Entschäumerzubereitung nach Beispiel 2b um den gleichen Effekt zu erzielen wie die nicht erfindungsgemäße Zubereitung nach Bsispiel 2a (1100 µl). Dies enspricht einer Reduktion auf 10,9 % bezogen auf das Volumen der eingesetzten Entschäumerzubereitung. Der Entschäumungstest zeigt eindeutig, dass die erfindungsgemäßen (selbstvernetzten) Siloxane signifikant besser entschäumen als die nicht erfindungsgemäßen (unvernetzten) Strukturen.

## Patentansprüche

1. Zusammensetzungen, **dadurch gekennzeichnet, dass** sie die Komponenten A und D enthalten, mit
A enthaltend ein Polymer erhältlich durch Umsetzung im Sinne einer Hydrosilylierung von Verbindungen der Formel (I)
Mₐ M^{v}_{b} M^{H}_{c}D_{d} D^{H}ₑ D^{v}_{f} T_{g} Qₕ Formel (I)
M = [R¹₃SiO_{1/2}]
M^{v}= [R³R¹₂SiO_{1/2}]
M^{H}= [R¹₂SiHo_{1/2}]
D = [R¹₂SiO_{2/2}]
D^{H} = [R¹SiHO_{2/2}]
D^{V} = [R³R¹SiO_{2/2}]
T = [R¹SiO_{3/2}]
Q = [SiO_{4/2}]
a = 0 bis 42,
b = 0 bis 42,
c = 0 bis 42,
d = 5 bis 600,
e = 0 bis 50,
f = 0 bis 50,
g = 0 bis 20,
h = 0 bis 20,
mit der Maßgabe, dass folgende Bedingungen erfüllt sind
a + b + c größer oder gleich 2,
b + f größer 0,
c+e größer 0 und 0,24*(a+b+c+d+e+f+g)größer(c+e),
R¹ unabhängig voneinander gleiche oder verschiedene Alkylreste mit 1 bis 30 Kohlenstoffatomen, oder gleiche oder verschiedene Arylreste mit 6 bis 30 Kohlenstoffatomen oder-OH oder-OR² ,
R² unabhängig voneinander gleiche oder verschiedene Alkylreste mit 1 bis 12 Kohlenstoffatomen, oder gleiche oder verschiedene Arylreste mit 6 bis 12 Kohlenstoffatomen,
R³ unabhängig voneinander gleiche oder verschiedene organische Reste mit einer endständigen C-C-Doppelbindung oder einer terminalen oder inneren C-C-Dreifachbindung
mit Verbindungen der Formel (I) und/oder mit anderen Verbindungen C, die eine C-C-Mehrfachbindung aufweisen, und nicht Formel (I) entsprechen, und
D Metallatomen oder-ionen der Platingruppe,
wobei die Komponente A ein Polymer enthält, erhältlich durch Umsetzung im Sinne einer Hydrosilylierung von Verbindungen der Formel (I) mit einer oder mehreren ungesättigten Verbindungen C.

2. Zusammensetzungen nach Anspruch 1, **dadurch gekennzeichnet, dass** die Komponente A ein Polymer aufweist, erhältlich durch Umsetzung im Sinne einer Hydrosilylierung von Verbindungen der Formel (I) und Verbindungen der Formel (II)
Mᵢ M^{H}ⱼ Dₖ D^{H}ₗ Tₘ Qₙ Formel (II)
mit
i = 0 bis 34,
j = 0 bis 34,
k = 5 bis 600,
I = 0 bis 50,
m = 0 bis 16,
n = 0 bis 16,
und den Bedingungen
i + j größer oder gleich 2 und
j + l größer oder gleich 2.

3. Zusammensetzungen nach mindestens einem der Ansprüche 1 oder 2, **dadurch gekennzeichnet, dass** die Komponente A ein Polymer enthält, erhältlich durch Umsetzung im Sinne einer Hydrosilylierung von Verbindungen der Formel (I) mit einer Verbindung der Formel (II) und einer oder mehreren ungesättigten Verbindungen C.

4. Zusammensetzungen nach mindestens einem der Ansprüche 1 bis 3, **dadurch gekennzeichnet, dass** sie eine Komponente B enthalten, erhältlich durch Umsetzung im Sinne einer Hydrosilylierung von Verbindungen der Formel (II), wie in Anspruch 2 definiert und ungesättigten Verbindungen C.

5. Zusammensetzungen nach mindestens einem der Ansprüche 1 bis 4, **dadurch gekennzeichnet, dass** sie eine oder mehrere Verbindungen C enthalten.

6. Zusammensetzungen nach mindestens einem der Ansprüche 1 bis 4, **dadurch gekennzeichnet, dass** die Verbindungen C Polyether der Formel (III) sind,
CH₂=CHCH₂O(C₂H₄O)ₒ(C₂H₃(CH₃)O)ₚ(C₂H₃(C₂H₅)O)_{q}(C₂H₃(Ph)O)ᵣR⁴ Formel (III)
mit
R⁴ unabhängig voneinander gleiche oder verschiedene organische Reste, die keine der Hydrosilylierung zugängliche Mehrfachbindung tragen,
bevorzugt Wasserstoff, Alkylreste oder Carboxyreste,
besonders bevorzugt Wasserstoff, Methyl, Butyl oder Acetyl,
insbesondere bevorzugt Wasserstoff,
o = 0 bis 200,
p = 0 bis 200,
q = 0 oder größer 0 bis 100,
r = 0 oder größer 0 bis 100,
und den Bedingungen
o + p + q + r größer 3, vorzugsweise ist p größer 0.

7. Zusammensetzungen nach mindestens einem der Ansprüche 1 bis 6, **dadurch gekennzeichnet, dass** die Zusammensetzung
die Komponente A mit einem Anteil von 1 bis 90 Gew.-%, vorzugsweise größer 1 bis 30 Gew.-%, bevorzugt 1 bis 15 Gew.-%,
die Komponente B mit einem Anteil von 0 bis 70 Gew. %, vorzugsweise größer 0 bis 40 Gew.-%. bevorzugt 1 bis 30 Gew.-%,
die Verbindungen C mit einem Anteil von 0 bis 95 Gew.-%, vorzugsweise 5 bis 90 Gew.-% bevorzugt 10 bis kleiner 90 Gew.-% und
die Komponente D mit einem Anteil von größer 0 bis 50 Gew.-ppm,
jeweils bezogen auf die Masse der Gesamtzusammensetzung, aufweist.

8. Zusammensetzungen nach Anspruch 7, **dadurch gekennzeichnet, dass** die Zusammensetzung
die Komponente A mit einem Anteil von 1 bis 15 Gew.-%,
die Komponente B mit einem Anteil von 1 bis 30 Gew.-%,
die Verbindungen C mit einem Anteil von 10 bis kleiner 90 Gew.-% und
die Komponente D mit einem Anteil von größer 0 bis 50 Gew.-ppm,
jeweils bezogen auf die Masse der Gesamtzusammensetzung, aufweist.

9. Zusammensetzungen nach Ansprüchen 1 bis 8, **dadurch gekennzeichnet, dass** die Komponenten
A zu mehr als 90 Gew.-% bezogen auf die Komponenten A Polymere mit einer gewichtsmittleren Molmasse von weniger als 2500000 g/mol, bestimmt wie in der Beschreibung angegeben, aufweist und die Komponente
B zu mehr als 90 Gew.-% bezogen auf die Komponente B mit einer gewichtsmittleren Molmasse von bis zu 1000000 g/mol, bestimmt wie in der Beschreibung angegeben, vorliegt und in der Zusammensetzung mit kleiner als 5 Gew.-%, bezogen auf die Gesamtzusammensetzung vorhanden ist.

10. Zusammensetzungen nach einem der vorangegangenen Ansprüche, **dadurch gekennzeichnet, dass** die Zusammensetzungen bei 20°C und 101300 Pa flüssig sind, in dass sie eine Viskosität, bestimmt wie in der Beschreibung angegeben, von kleiner als 120 Pa.s aufweisen.

11. Zusammensetzungen nach einem der vorangegangenen Ansprüche, **dadurch gekennzeichnet, dass** die Zusammensetzungen Wasser und/oder einen Emulgator enthalten.

12. Zusammensetzungen nach einem der vorangegangenen Ansprüche, **dadurch gekennzeichnet, dass** die Zusammensetzungen eine Viskosität, bestimmt wie in der Beschreibung angegeben, von kleiner 100 Pa*s aufweisen.

13. Verfahren zur Herstellung von Zusammensetzungen gemäß einem der vorangegangenen Ansprüche, **dadurch gekennzeichnet, dass** mindestens eine Verbindung der Formel (I) mit Verbindungen der Formel (I) und/oder mit anderen Verbindungen C, die eine C-C-Mehrfachbindung aufweisen, und nicht Formel (I) entsprechen, unter hydrosilylierenden Bedingungen und in Gegenwart eines die Hydrosilylierung katalysierenden Katalysators umgesetzt werden.

14. Verfahren nach Anspruch 13 **dadurch gekennzeichnet, dass** mindestens eine Verbindung der Formel (I) und mindestens eine Verbindung der Formel (II) mit mindestens einer ungesättigten Verbindung C, die eine oder mehrere C-C-Mehrfachbindungen enthält, unter hydrosilylierenden Bedingungen umgesetzt wird.

15. Verfahren nach mindestens einem der Ansprüche 13 oder 14, **dadurch gekennzeichnet, dass** die hydrosilylierende Umsetzung unter Zusatz von Wasser, gegebenenfalls eines Lösemittels und gegebenenfalls unter Zusatz von Emulgatoren durchgeführt wird.

16. Verfahren nach mindestens einem der Ansprüche 13 bis 15 **dadurch gekennzeichnet, dass** die Reaktionskomponenten dem Reaktionsgefäß zugeführt werden, mit der Maßgabe, dass vor Beginn der Zugabe des Katalysators mindestens ein Aliquot der Verbindung der Formel (I) oder mindestens ein Aliquot einer Mischung enthaltend die Verbindung (II) und eine ungesättigte Verbindung C, in der Reaktionsmischung im Reaktionsgefäß vorliegen.

17. Verwendung von Zusammensetzungen nach Ansprüchen 1 bis 12 zur Herstellung von Entschäumern oder als Entschäumer von Flüssigkeiten.

## Claims

1. Compositions, **characterized in that** they comprise the components A and D, with
A comprising a polymer obtainable by reaction in the sense of a hydrosilylation of compounds of the formula (I)
Mₐ M^{H}_{b} M^{H}_{c} D_{d} D^{H}ₑ D^{v}_{f} T_{g} Qₕ formula (I)
M = [R¹₃SiO_{1/2}]
M^{V} = [R³R¹₂SiO_{1/2}]
M^{H} = [R¹₂SiHO_{1/2}]
D = [R¹₂SiO_{2/2}]
D^{H} = [R¹SiHO_{2/2}]
D^{V} = [R³R¹SiO_{2/2}]
T = [R¹SiO_{3/2}]
Q = [SiO_{4/2}]
a = 0 to 42,
b = 0 to 42,
c = 0 to 42,
d = 5 to 600,
e = 0 to 50,
f = 0 to 50,
g = 0 to 20,
h = 0 to 20,
with the proviso that the following conditions are satisfied
a + b + c is greater than or equal to 2,
b + f is greater than 0,
c + e is greater than 0 and 0.24 * (a + b + c + d + e + f + g) is greater than (c + e),
R¹ independently of one another are identical or different alkyl radicals having 1 to 30 carbon atoms, or identical or different aryl radicals having 6 to 30 carbon atoms or -OH or -OR²,
R² independently of one another are identical or different alkyl radicals having 1 to 12 carbon atoms, or identical or different aryl radicals having 6 to 12 carbon atoms,
R³ independently of one another are identical or different organic radicals having a terminal C-C double bond or a terminal or internal C-C triple bond
with compounds of the formula (I) and/or with other compounds C which have a C-C multiple bond and do not correspond to formula (I),
and
D is metal atoms or ions of the platinum group,
wherein the component A comprises a polymer obtainable by reaction in the sense of a hydrosilylation of compounds of the formula (I) with one or more unsaturated compounds C.

2. Compositions according to Claim 1, **characterized in that** the component A has a polymer obtainable by reaction in the sense of a hydrosilylation of compounds of the formula (I) and compounds of the formula (II)
Mᵢ M^{H}ⱼ Dₖ D^{H}ₗ Tₘ Qₙ formula (II)
with
i = 0 to 34,
j = 0 to 34,
k = 5 to 600,
l = 0 to 50,
m = 0 to 16,
n = 0 to 16,
and the conditions
i + j is greater than or equal to 2 and
j + 1 is greater than or equal to 2.

3. Compositions according to at least one of Claims 1 and 2, **characterized in that** the component A comprises a polymer obtainable by reaction in the sense of a hydrosilylation of compounds of the formula (I) with a compound of the formula (II) and one or more unsaturated compounds C.

4. Compositions according to at least one of Claims 1 to 3, **characterized in that** they comprise a component B obtainable by reaction in the sense of a hydrosilylation of compounds of the formula (II), as defined in Claim 2 and unsaturated compounds C.

5. Compositions according to at least one of Claims 1 to 4, **characterized in that** they comprise one or more compounds C.

6. Compositions according to at least one of Claims 1 to 4, **characterized in that** the compounds C are polyethers of the formula (III),
CH₂=CHCH₂O (C₂H₄O)ₒ (C₂H₃(CH₃) O)ₚ(C₂H₃ (C₂H5ₛ)O)_{q} (C₂H₃(Ph)O)ᵣR⁴ formula (III)
with
R⁴ independently of one another are identical or different organic radicals which carry no multiple bond accessible to the hydrosilylation,
preferably hydrogen, alkyl radicals or carboxy radicals,
particularly preferably hydrogen, methyl, butyl or acetyl,
particularly preferably hydrogen,
o = 0 to 200,
p= 0 to 200,
q= 0 or greater than 0 to 100,
r= 0 or greater than 0 to 100,
and the conditions
o + p + q + r is greater than 3, preferably p is greater than 0.

7. Compositions according to at least one of Claims 1 to 6, **characterized in that** the composition has the component A with a fraction of 1 to 90% by weight, preferably greater than 1 to 30% by weight, preferably 1 to 15% by weight,
the component B with a fraction of 0 to 70% by weight, preferably greater than 0 to 40% by weight, preferably 1 to 30% by weight,
the compounds C with a fraction of 0 to 95% by weight, preferably 5 to 90% by weight, preferably 10 to less than 90% by weight and
the component D with a fraction of greater than 0 to 50 ppm by weight,
in each case based on the mass of the total composition.

8. Compositions according to Claim 7, **characterized in that** the composition has
the component A with a fraction of 1 to 15% by weight,
the component B with a fraction of from 1 to 30% by weight,
the compounds C with a fraction of from 10 to less than 90% by weight and
the component D with a fraction of greater than 0 to 50 ppm by weight,
in each case based on the mass of the total composition.

9. Compositions according to Claims 1 to 8, **characterized in that** the components
A is present to more than 90% by weight, based on the components A, polymers with a weight-average molar mass of less than 2 500 000 g/mol, determined as stated in the description, and the component
Bis present to more than 90% by weight, based on the component B with a weight-average molar mass of up to 1 000 000 g/mol, determined as stated in the description, and is present in the composition with less than 5% by weight, based on the total composition.

10. Compositions according to one of the preceding claims, **characterized in that** the compositions are liquid at 20°C and 101300 Pa, **in that** they have a viscosity, determined as stated in the description, of less than 120 Pa.s.

11. Compositions according to one of the preceding claims, **characterized in that** the compositions comprise water and/or an emulsifier.

12. Compositions according to one of the preceding claims, **characterized in that** the compositions have a viscosity, determined as stated in the description, of less than 100 Pa*s.

13. Process for the preparation of compositions according to one of the preceding claims, **characterized in that** at least one compound of the formula (I) are reacted with compounds of the formula (I) and/or with other compounds C which have a C-C multiple bond and do not correspond to formula (I) under hydrosilylating conditions and in the presence of a catalyst catalysing the hydrosilylation.

14. Process according to Claim 13, **characterized in that** at least one compound of the formula (I) and at least one compound of the formula (II) is reacted with at least one unsaturated compound C which contains one or more C-C multiple bonds under hydrosilylating conditions.

15. Process according to at least one of Claims 13 or 14, **characterized in that** the hydrosilylating reaction is carried out with the addition of water, optionally a solvent and optionally with the addition of emulsifiers.

16. Process according to at least one of Claims 13 to 15, **characterized in that** the reaction components are supplied to the reaction vessel, with the proviso that, prior to starting to add the catalyst, at least one aliquot of the compound of the formula (I) or at least one aliquot of a mixture comprising the compound (II) and an unsaturated compound C are present in the reaction mixture in the reaction vessel.

17. Use of compositions according to Claims 1 to 12 for producing antifoams or as antifoams of liquids.

## Revendications

1. Compositions, **caractérisées en ce qu'**elles contiennent les composants A et D, avec
A contenant un polymère pouvant être obtenu par mise en réaction dans le sens d'une hydrosilylation de composés de formule (I)
Mₐ M^{v}_{b} M^{H}_{c} D_{d} D^{H}ₑ D^{v}_{f} Tg Qₕ formule (I)
M = [R¹₃SiO_{1/2}]
M^{V} = [R³R¹₂SiO_{1/2}]
M^{H} = [R¹₂SiHO_{1/2}]
D = [R¹₂SiO_{2/2}]
D^{H} = [R¹SiHO_{2/2]}
D^{V} = [R³R¹SiO_{2/2}]
T = [R¹SiO_{3/2}]
Q = [SiO_{4/2}]
a = 0 à 42,
b = 0 à 42,
c = 0 à 42,
d = 5 à 600,
e = 0 à 50,
f = 0 à 50,
g = 0 à 20,
h = 0 à 20,
étant entendu que les conditions suivantes sont remplies
la somme a + b + c est supérieure ou égale à 2,
la somme b + f est supérieure à 0,
la somme c + e est supérieure à 0 et
le produit 0,24 * (a + b + c + d + e + f + g) est supérieur à (c + e),
R¹ représente chaque fois indépendamment des radicaux alkyle identiques ou différents ayant de 1 à 30 atomes de carbone, ou des radicaux aryle identiques ou différents ayant de 6 à 30 atomes de carbone ou -OH ou -OR₂
R² représente chaque fois indépendamment des radicaux alkyle identiques ou différents ayant de 1 à 12 atomes de carbone, ou des radicaux aryle identiques ou différents ayant de 6 à 12 atomes de carbone,
R³ représente chaque fois indépendamment des radicaux organiques identiques ou différents comportant une double liaison C-C en bout de chaîne ou une triple liaison C-C terminale ou interne,
avec des composés de formule (I) et/ou avec d'autres composés C qui comportent une liaison multiple C-C et ne correspondent pas à la formule (I),
et
D des atomes ou ions métalliques de la famille du platine,
le composant A contenant un polymère qui peut être obtenu par mise en réaction dans le sens d'une hydrosilylation de composés de formule (I) avec un ou plusieurs composés insaturés C.

2. Compositions selon la revendication 1, **caractérisées en ce que** le composant A comporte un polymère pouvant être obtenu par mise en réaction dans le sens d'une hydrosilylation de composés de formule (I) et de composés de formule (II)
MᵢM^{H}ⱼ Dₖ D^{H}ₗ Tₘ Qₙ formule (II)
où
i = 0 à 34,
j = 0 à 34,
k = 5 à 600,
l = 0 à 50,
m = 0 à 16,
n = 0 à 16,
et avec les conditions
la somme i + j est supérieure ou égale à 2 et
la somme j + l est supérieure ou égale à 2.

3. Compositions selon au moins l'une quelconque des revendications 1 et 2, **caractérisées en ce que** le composant A contient un polymère, pouvant être obtenu par mise en réaction dans le sens d'une hydrosilylation de composés de formule (I) avec un composé de formule (II) et un ou plusieurs composés insaturés C.

4. Compositions selon au moins l'une quelconque des revendications 1 à 3, **caractérisées en ce qu'**elles contiennent un composant B, pouvant être obtenu par mise en réaction dans le sens d'une hydrosilylation de composés de formule (II), tels que définis dans la revendication 2, et de composés insaturés C.

5. Compositions selon au moins l'une quelconque des revendications 1 à 4, **caractérisées en ce qu'**elles contiennent un ou plusieurs composés C.

6. Compositions selon au moins l'une quelconque des revendications 1 à 4, **caractérisées en ce que** les composés C sont des polyéthers de formule (III),
CH₂=CHCH₂O(C₂H₄O)ₒ(C₂H₃(CH₃)O)ₚ(C₂H₃(C₂H₅)O)_{q}(C₂H₅(Ph)O)ᵣR⁴ formule (III)
où
R⁴ représente chaque fois indépendamment des radicaux organiques identiques ou différents, qui ne portent aucune liaison multiple accessible à une hydrosilylation,
de préférence un atome d'hydrogène, des radicaux alkyle ou des radicaux carboxy,
de façon particulièrement préférée un atome d'hydrogène, le groupe méthyle, butyle ou acétyle,
de façon plus particulièrement préférée un atome d'hydrogène,
o = 0 à 200,
p = 0 à 200,
q = 0 ou plus de 0 à 100,
r = 0 ou plus de 0 à 100,
et avec les conditions
la somme o + p + q + r est supérieure à 3, de préférence p est supérieur à 0.

7. Compositions selon au moins l'une quelconque des revendications 1 à 6, **caractérisées en ce que** la composition comporte
le composant A en une proportion de 1 à 90 % en poids, de préférence de plus de 1 à 30 % en poids, de façon particulièrement préférée de 1 à 15 % en poids,
le composant B en une proportion de 0 à 70 % en poids, de préférence de plus de 0 à 40 % en poids, de façon particulièrement préférée de 1 à 30 % en poids,
le composant C en une proportion de 0 à 95 % en poids, de préférence de 5 à 90 % en poids, de façon particulièrement préférée de 10 à moins de 90 % en poids et
le composant D en une proportion de plus de 0 à 50 ppm en poids,
chaque fois par rapport à la masse de la composition totale.

8. Compositions selon la revendication 7, **caractérisées en ce que** la composition comporte
le composant A en une proportion de 1 à 15 % en poids,
le composant B en une proportion de 1 à 30 % en poids,
le composant C en une proportion de 10 à moins de 90 % en poids et
le composant D en une proportion de plus de 0 à 50 ppm en poids,
chaque fois par rapport à la masse de la composition totale.

9. Compositions selon les revendications 1 à 8, **caractérisées en ce que** le composant
A comporte à raison de plus de 90 % en poids par rapport au composant A des polymères ayant une masse molaire en moyenne en poids de moins de 2 500 000 g/mole, déterminée comme indiqué dans la description et le composant
B est présent à raison de plus de 90 % en poids par rapport au composant B avec une masse molaire en moyenne en poids de jusqu'à 1 000 000 g/mole, déterminée comme indiqué dans la description, et est présent dans la composition à raison de moins de 5 % en poids, par rapport à la composition totale.

10. Compositions selon l'une quelconque des revendications précédentes, **caractérisées en ce que** les compositions sont liquides à 20 °C et sous 101 300 Pa, et **en ce qu'**elles présentent une viscosité, déterminée comme indiqué dans la description, de moins de 120 Pa.s.

11. Compositions selon l'une quelconque des revendications précédentes, **caractérisées en ce que** les compositions contiennent de l'eau et/ou un émulsifiant.

12. Compositions selon l'une quelconque des revendications précédentes, **caractérisées en ce que** les compositions présentent une viscosité, déterminée comme indiqué dans la description, de moins de 100 Pa.s.

13. Procédé pour la préparation de compositions selon l'une quelconque des revendications précédentes, **caractérisé en ce qu'**on fait réagir au moins un composé de formule (I) avec des composés de formule (I) et/ou avec d'autres composés C qui comportent une liaison multiple C-C et ne correspondent pas à la formule (I), dans des conditions d'hydrosilylation et en présence d'un catalyseur catalysant l'hydrosilylation.

14. Procédé selon la revendication 13, **caractérisé en ce qu'**on fait réagir dans des conditions d'hydrosilylation au moins un composé de formule (I) et au moins un composé de formule (II) avec au moins un composé insaturé C qui contient une ou plusieurs liaisons multiples C-C.

15. Procédé selon au moins l'une quelconque des revendications 13 et 14, **caractérisé en ce qu'**on effectue la réaction d'hydrosilylation avec addition d'eau, éventuellement d'un solvant et éventuellement avec addition d'émulsifiants.

16. Procédé selon au moins l'une quelconque des revendications 13 à 15, **caractérisé en ce qu'**on envoie les composants réactionnels au récipient de réaction, étant entendu qu'avant le début de l'addition du catalyseur au moins une partie aliquote du composé de formule (I) ou au moins une partie aliquote d'un mélange contenant le composé (II) et un composé insaturé C est présente dans le mélange réactionnel dans le récipient de réaction.

17. Utilisation de compositions selon les revendications 1 à 12 pour la préparation d'antimousses ou en tant qu'agents anti-mousse de liquides.
